# EUROPEAN PATENT APPLICATION

(11) **EP 3 240 156 A1**
(43) Date of publication of application: **01.11.2017**
(21) Application number: 17166991.4
(22) Date of filing: 19.04.2017
(51) Int. Cl.: H02K 11/02, H02K 11/40

(54) **SYNCHRONOUS PERMANENT-MAGNET MOTOR WITH IMPROVED ELECTRONIC CONTROL BOARD**

(30) Priority: 28.04.2016 IT UA20162985
(71) Applicant: TACO ITALIA S.r.l., 36066 Sandrigo (VI) (IT)
(72) Inventor: MURARO, Cristian, 36010 Monticello Conte Otto (VI) (IT)
(74) Representative: Botti, Mario

(57) **Abstract**

The invention relates to a synchronous permanent-magnet motor preferably used in fluid driving pumps and in particular circulators for heating and/or cooling plants, of the type comprising:
- a stator or stator stack housed in a circulator body;
- a permanent-magnet rotor;
- an electronic control board of the circulator, installed in a casing associated with the circulator body. Advantageously a direct internal electrical connection is provided between the stator stack 11 and the electronic board so as to form a functional earthing connection terminal. This connection is obtained by means of a terminal having one end fixed to the metal structure of the stator stack and the other end connected to said electronic board.

## Description

### Field of application

The present invention relates to a synchronous permanent-magnet motor with an improved electronic control board in particular for a fluid circulation pump.

More particularly, the invention relates to a synchronous permanent-magnet motor with improved electronic control board for a fluid circulator for boilers or heating and/or cooling plants of the type comprising:
- a stator or stator stack housed in a circulator body;
- a permanent-magnet rotor;
- an electronic control board of the circulator, installed in a casing associated with the circulator body.

### Prior art

As is well-known in this specific technical sector, in order to ensure the circulation of a fluid in boilers or hydraulic plants, in particular in heating and/or cooling plants, circulation pumps commonly called circulators are used.

During the last few years circulation pumps operated by a synchronous electric motor, which offers various advantages in terms of cost, reliability, working life, simple design and easy maintenance, have become well-established.

At present, the most common circulators are operated by a synchronous permanent-magnet electric motor which has a greater regulating efficiency and precision compared to an asynchronous motor, as well as a greater compactness for the same power.

In their most basic structure, synchronous permanent-magnet motors have a fixed portion, called stator, and a portion rotating about an axis of rotation, called rotor. Generally, the stator comprises a core of ferromagnetic material on which reels, also called stator poles, having windings which are powered by the mains via an electronic control board, are mounted.

In particular, the electronic control board is able to receive at its input a signal from the electric power supply network and supply the windings of the motor stator in modes able to regulate both start-up thereof and rotation at working speed.

Normally in circulators with variable-speed synchronous motors, operation is ensured by means of an electronic board provided with inverter technology; one of the typical aspects of this technology is the emission of electromagnetic disturbances and this problem also results in the need to provide, where necessary, an EMI filter associated with the electrical or electronic apparatus in order to prevent disturbances on the power supply network.

A know solution is disclosed in the patent document No. EP 0 565 312 that shows a terminal 362 connected to the stator pack and to the electronic board 360. However, such a connection does not provide any reliable stable structure for motor that should undergo many vibrations in normal working conditions.

The technical problem underlying the present invention is that of providing a synchronous permanent-magnet motor with improved electronic control board for a fluid circulator, said motor having structural and functional characteristics such as to reduce the complexity and consequently the cost of the EMI filter.

A further object of the invention is to provide a connection between electronic board and stator core made of ferromagnetic material which is minimally invasive with respect to the internal structure of the electrical interconnections of the circulator.

### Summary of the invention

The proposed solution forming the basis of the present invention is that of forming a direct connection between the stator stack and the electronic control board of the motor which drives the circulator.

On the basis of this proposed solution, the aforementioned technical problem is solved by a synchronous permanent-magnet motor with improved electronic control board of the type used in fluid driving pumps and in particular circulators for heating and/or cooling plants, comprising:
- a stator or stator stack housed in a circulator body;
- a permanent-magnet rotor;
- an electronic board of the circulator, installed in a casing associated with the circulator body, characterized in that it a direct internal electrical connection is provided by means of a terminal (25) having one end fixed to the stator stack and the other end connected to said electronic board so as to form a functional earthing connection terminal; said terminal being a connector fastened to the stator stack by means of over-moulding

Moreover, the end of the electrical connection connected to the electronic board is connected to one end of a decoupling capacitance.

It should be noted that the aforementioned terminal passes through a partition for separation from the pump body, present in said casing.

Essentially the terminal acts as a functional or virtual earth for said circulator.

Further characteristic features and advantages of the synchronous motor according to the invention will emerge from the description, provided hereinbelow, of a non-limiting example of embodiment thereof with reference to the attached drawings.

### Brief description of the drawings

In these drawings:

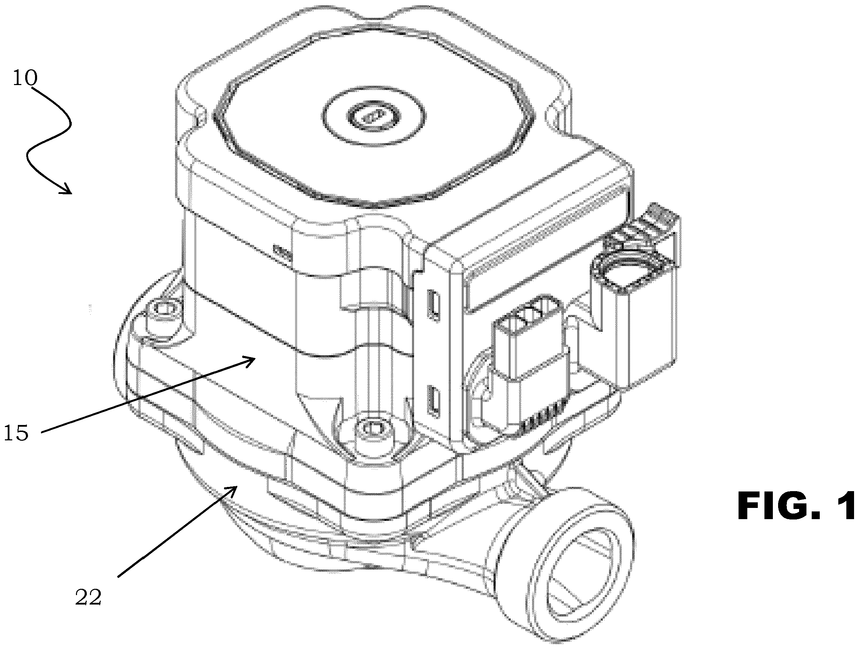

- Figure 1 shows a perspective view of a circulator designed according to the present invention;
- Figure 2 shows an exploded perspective view of the main components of the circulator shown in Figure 1;
- Figure 3 shows a perspective view of the stator of the synchronous motor incorporated in the circulator according to Figure 1;
- Figure 4 shows an electrical diagram of a power supply stage of an electronic control board of the circulator according to the invention;
- Figure 5 shows a partial schematic cross-section of the circulator according to Figure 1;
- Figure 6 shows an attenuation diagram.

### Detailed description

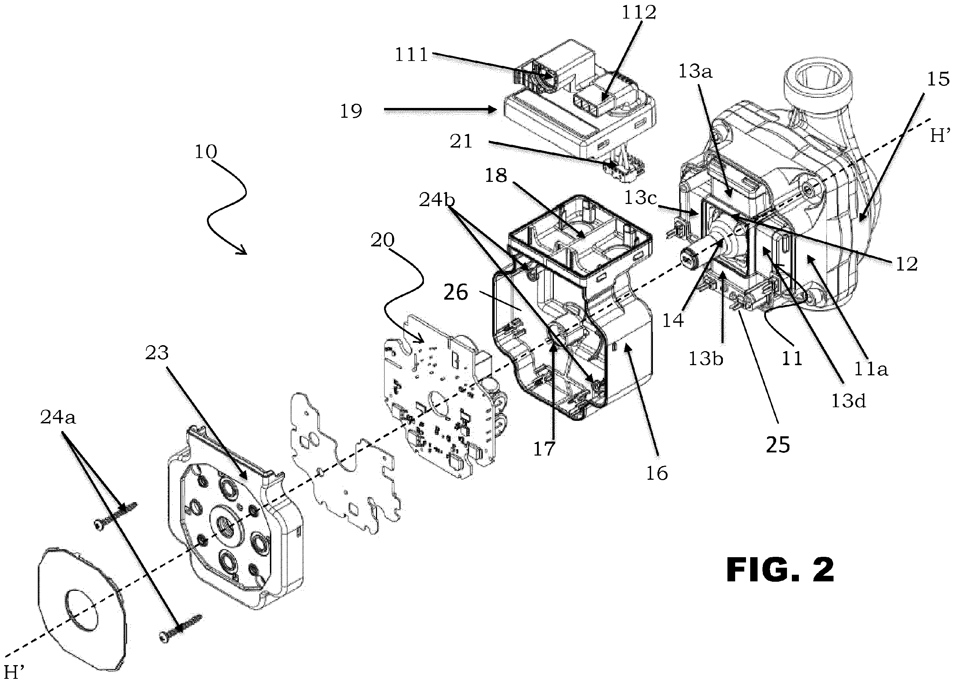

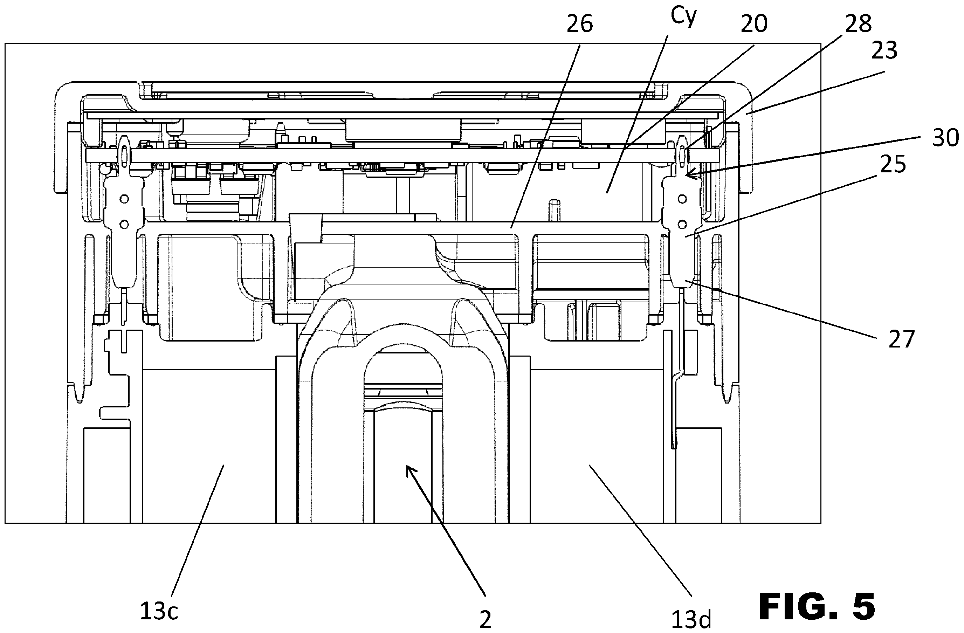

With reference to these figures and in particular to the examples of Figures 2 to 5, 10 denotes overall and in schematic form a circulator or circulation pump which allows the circulation of a fluid in a boiler or in a hydraulic plant, in particular in a heating and/or cooling plant.

In the embodiment described here by way of a non-limiting example, the circulator 10 comprises and is operated by a synchronous permanent-magnet motor, this however not limiting in any way the rights of the Applicant or the scope of the invention.

As shown in Figure 2, the motor of the circulator 10 comprises a stator 11 or stator stack, which comprises a central portion 12 in the form of a hollow parallelepiped and four stator pole supports or arms 13a, 13b, 13c and 13d, each stator pole support extending in cross-like form from the central portion 12 and projecting therefrom in the manner of a reel for a respective winding. The stator poles 13a and 13b are arranged opposite each other and form a first pair of opposite stator poles. In the same way, the stator poles 13a and 13b are arranged opposite each other and form a second pair of opposite stator poles.

Moreover, the stator poles 13a and 13b are offset by 90 geometric degrees with respect to the stator poles 13c and 13d. It is emphasized however that other configurations are also possible, Figure 2 being provided only by way of a non-limiting example of the present invention.

The motor of the circulator 10 further comprises a rotor 2 of the permanent-magnet type, which is housed inside a separator sleeve 14 generally made of plastic material. The rotor is connected to a shaft of the motor, the rotation of which causes the rotation of an impeller in turn connected to the motor shaft and rotatably movable inside a volute 22 of a pump body 15.

As mentioned above, the circulator 10 comprises an electronic control board 20 able to power and control all the functions of the synchronous motor of this circulator 10.

The stator 11 is partially enclosed both by a casing 11 a connected to the pump body 16 and by a box-shaped casing 16 which extends along the direction of the axis of rotation H'-H'.

The box-shaped body 16 is associated with the pump body 15 and has centrally a circular opening 17 for receiving the sleeve of the motor shaft. The box-shaped casing 16 also houses the electronic control board 20 and comprises laterally a support portion 18 for an electrical connection module 19. More particularly the electronic board 20 is housed inside a portion of the casing divided by a partition 26 from the portion of the same casing which encloses the stator stack 11.

The module 19 is an electrical interconnection lid which houses both power connectors and signal connectors for the electrical connection externally of the circulator 10. The support portion 18 has peripherally a number of snap-engaging teeth intended to be engaged by corresponding slots provided on the side edges of the module 19.

The connection module 19 comprises at least one pair of internal electrical connectors 21 designed to be connected by means of a fast-coupling connection to the electronic control board 20.

In particular, in the embodiment shown in Figure 2, the connection module 19 is intended to receive an electrical power connection element (not shown) via a first connector port 111 as well as an electrical signal connection element (not shown) by means of a second connector port 112.

The end of the box-shaped body 16 opposite to the pump body 15 is closed by a base plate 23 which is substantially cup-shaped and fixed to this box-shaped body 16 by means of a system of screws 24a received inside corresponding threaded holes 24b formed in the box-shaped body 16.

Advantageously, according to the invention, a direct internal electrical connection 30 is provided between the stator stack 11 and the electronic board 20 so as to form a virtual earth connection terminal.

More particularly, this direction connection 30 takes the form in the example described here by way of a non-limiting example of a terminal 25 having one end 27 fixed to the stator pack 11 and the other end 28 connected to said electronic board 20.

The terminal 25 is metallic and entirely similar to the terminals 29 used for connection to the ends of the stator windings in the stator stack 11.

The terminal 25 is a metal terminal which has its end 27 connected to the metal structure of the stator stack 11 and fastened in position by means of over-moulding production step using resin or synthetic plastic material.

The end 28 connected to the electronic board 20 penetrates and crosses the said board until it reaches a conductive track of the board which leads to a terminal of a decoupling capacitance Cy. In this way the stator stack 11 is connected to a practically constant potential.

In order to reach the electronic board 20, the terminal 25 passes through the separating partition 26 provided in the box-shaped casing 16. This configuration is obtained by means of the over-moulding operation and does not adversely affect the sealed insulation of the electronic board 20 in the associated seat of the casing 16.

It should be noted that the electronic control board 20 is a printed circuit board on which a plurality of electrical and electronic components intended to drive the power supply current and control the motor of the circulator 10 are provided.

The electronic control board 10 comprises a microcontroller (not shown) designed to control the motor of the circulator 10, for example adjusting automatically the speed of rotation thereof, adapting it to the varying requirements of the boiler and/or of the heating and/or cooling plant in which the circulator 10 is installed.

The electronic control board 20 is arranged in the circulator 10, in particular in the seat of the casing 16, so as to extend in a plane a which is substantially perpendicular to the axis of rotation H'-H'.

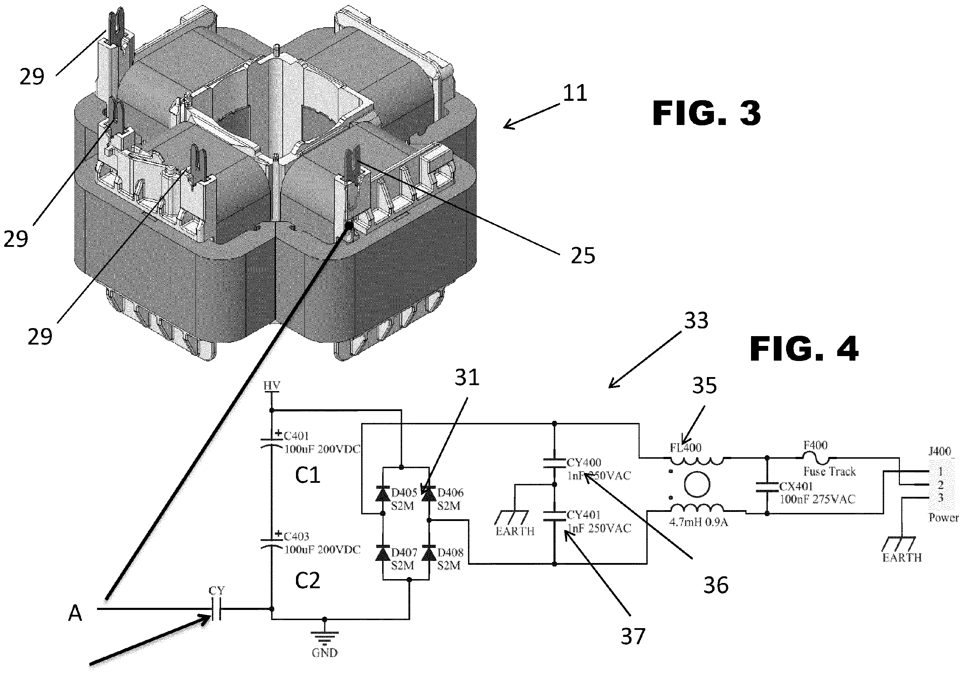

As shown in Figure 4, the electronic control board 20 receives at its input a voltage signal from the electrical power supply network and used for driving the motor of the circulator 10.

The electrical diagram shown in Figure 4 purely by way of a non-limiting example illustrates the power supply stage 33 of the electronic board 20. This stage 33 comprises electronic power components such as at least a power diode bridge circuit 31 and two capacitances C1, C2 for converting the alternating supply voltage into a direct-current supply voltage.

In this way two constant-voltage reference potentials indicated by HV and GND in Figure 4 are obtained.

The electronic control board 20 further includes an inducer 35 and two capacitances 36 and 37 which act as a filter for suppressing electromagnetic interference (EMI) and radiofrequency interference (RFI).

In the diagram of Figure 4 the two capacitances C1 and C2 have the function of obtaining the fixed-potential reference voltages (HV, MV and GND) necessary for operation of the inverter (not shown since conventional) for controlling the motor 10.

The capacitances or capacitors C1 and C2 lie on the electronic control board 20 in such a way that their longitudinal axis C-C is substantially parallel to the plane of the board. In other words, the axis of both the capacitors is orthogonal to the axis of rotation H'-H' of the circulator 10. Namely, the longitudinal axis C-C of the capacitors C1 and C2 is substantially parallel to the plane α in which the support base of the electronic control board 20 lies, this longitudinal axis C-C being therefore orthogonal to the axis of rotation H'-H'.

Advantageously, still according to the present invention, the end 28 of the terminal 25 connected to the electronic board (20) is connected to one end of a decoupling capacitance (Cy).

The other end of this capacitance Cy is connected to a terminal (GND) of the bridge circuit 31. The capacitance Cy has a not very high capacitance value, otherwise it would offer too low impedance to the supply frequency and this could cause a leakage current also of a considerable magnitude, which could also create safety-related problems for the user.

From the above description it clearly emerges that the stator stack of the circulator according to the invention acts as a functional or virtual earth for the purposes of the EMC emissions.

In this sense it may not be regarded as an earth connection for safety purposes.

In order to understand more fully the aspects of the present invention it is worth mentioning that the electric/electronic devices emit RF radiofrequency disturbances which must be filtered. For this purpose EMI filters are generally provided such that the disturbance may be broken down into a common-mode component and a differential-mode component.

For example, an EMI filter is a passive filter present in most electronic equipment in order to allow these devices to comply with the electromagnetic compatibility standards, in particular the standards concerning the conducted emissions. An EMI filter is a low-pass filter which is connected as last stage between an electronic apparatus and the electric power supply network so as to attenuate the disturbance components which each electronic device would tend to emit.

Obviously, the filter must be transparent to the power supply frequency (50-60 Hz) so as to allow the correct operation of the electrical device, while it must operate within the range of frequencies stipulated by the standards (150 kHz-30 MHz).

An EMI filter uses passive reactive elements in configurations such as to provide, in relation to the RF disturbance, impedance mismatching or attenuation effects within given frequency bands.

For power supply lines the most important considerations are those associated with the power and the dimensions of the filter for the same attenuation. In filters for AC power supply lines, also called network filters, the impedance to common-mode RF currents is by far higher than the impedance to differential-mode currents.

Thus, owing to the fact that the stator stack 11 of the motor has been connected to a constant electric potential directly or via a decoupling capacitance Cy, it is possible to reduce significantly the EMI disturbances emitted into the environment by the circulator and thus help reduce the dimensions and the cost of the filter and/or of the components of the control board which would be necessary in order to obtain the same results.

The solution according to the present invention avoids the use of an EMI filter or in any case allows a small-size EMI filter to be used.

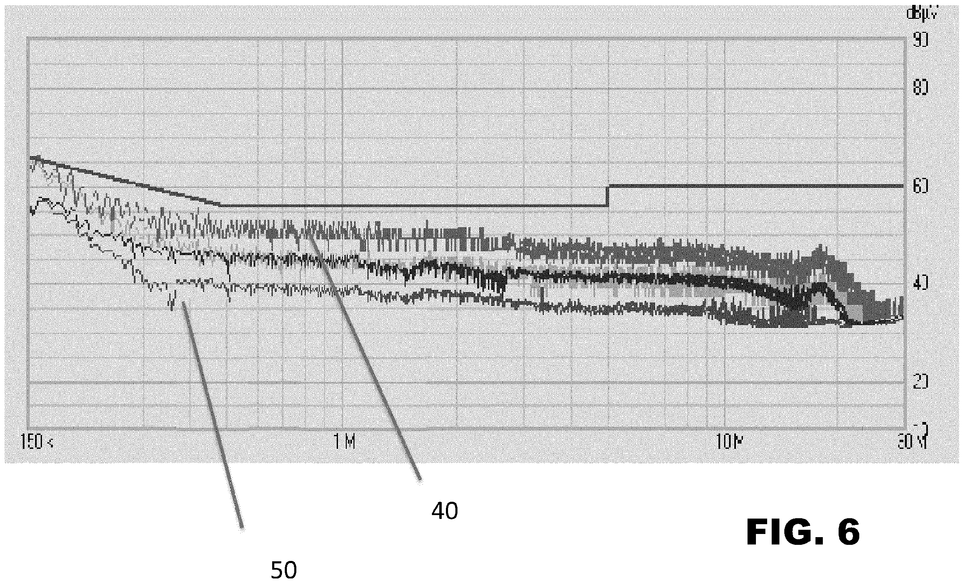

Tests carried out by the Applicant have shown that the radiofrequency disturbances are greatly attenuated by the use of the virtual earth terminal according to the present invention; for example, the curve 40 in the diagram of Figure 6, where the disturbance frequency is shown along the x axis and the frequency amplitude is shown along the y axis, represents the response of a circulator without the functional earth terminal and the curve 50 represents the response of a circulator according to the invention.

For the above it can be clearly seen how the solution according to the present invention is able to reduce the complexity and consequently the cost of the EMI filter incorporated in the electronic board of the circulator.

## Claims

1. Synchronous permanent-magnet motor used in fluid driving pumps and, in particular, in circulators for heating and/or cooling plants, of the type comprising:
- a stator (11) or stator stack housed in a circulator body (15);
- a permanent-magnet rotor (2);
- an electronic control board (20) of the circulator (10), installed in a casing (16) associated with the circulator body (15), **characterised in that** a direct internal electrical connection is provided by means of a terminal (25) having one end (27) fixed to the stator stack (11) and the other end (28) connected to said electronic board (20) so as to form a functional earthing connection terminal; said terminal (25) being a connector fastened to the stator stack (11) by means of over-moulding.

2. Synchronous motor according to claim 1, **characterised in that** the end (28) of the electrical connection connected to the electronic board (20) is connected to one end of a decoupling capacitance (Cy).

3. Synchronous motor according to claim 1, **characterised in that** said terminal (25) passes through a partition (26) for separation from the pump body (15), present in said casing (16).

4. Synchronous motor according to claim 1, **characterised in that** said terminal (25) acts as a functional or virtual earth for said circulator.

5. Synchronous motor according to any one of the preceding claims, **characterised in that** the stator stack is electrically connected to a constant potential different from the earth.

6. Synchronous motor according to any one of the preceding claims, **characterised in that** said electronic board includes an EMI filter of reduced complexity.

7. Synchronous motor according to claim 1, wherein said electronic board (20) includes a power supply stage (33) comprising electronic power components such as at least a power diode bridge circuit (31) and two capacitances (C1, C2) for converting the alternating supply voltage into a direct-current supply voltage.

8. Circulator for heating and/or cooling plants driven by a synchronous electric motor according to any one of the preceding claims.
